(19)

**Europäisches Patentamt**

**European Patent Office**

**Office européen des brevets**

(11) **EP 4 521 763 A1**

(12) **EUROPEAN PATENT APPLICATION**

(43) Date of publication:
**12.03.2025 Bulletin 2025/11**

(21) Application number: **23201321.9**

(22) Date of filing: **02.10.2023**

(51) International Patent Classification (IPC):
*H04N 23/60* (2023.01)     *H04N 23/617* (2023.01)

(52) Cooperative Patent Classification (CPC):
**H04N 23/64; G06T 7/0002; H04N 23/617;**
G06T 2207/20081; G06T 2207/30168

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Carl Zeiss Microscopy GmbH**
**07745 Jena (DE)**
• **Ecole Polytechnique Fédérale de Lausanne**
**1015 Lausanne (CH)**

(72) Inventors:
• **UMLAUFT, Jonas**
**73447 Oberkochen (DE)**

• **TZOUMAS, Stratis**
**81379 München (DE)**
• **LUTZWEILER, Christian**
**81379 München (DE)**
• **CEVHER, Volkan**
**1015 Lausanne (CH)**
• **CARVALHO, Pedro**
**1015 Lausanne (CH)**
• **VIANO, Luca**
**1015 Lausanne (CH)**

(74) Representative: **Wenzel Nemetzade Warthmüller
Patentanwälte Part mbB
Maximilianstraße 2
80539 München (DE)**

(54) **METHOD FOR IMAGING A SAMPLE WITH AN IMAGING DEVICE**

(57)     A method for imaging a sample (30) with an imaging device (20) is proposed, wherein imaging parameters of the imaging device (20) are determined by by a Bayesian optimization system (10), wherein the method comprises the following steps: imaging the sample (30) with the imaging device (20) with a first set of imaging parameters; evaluating the quality of the image; changing at least one of the imaging parameters of the imaging device (20) for imaging the sample (30) based on the evaluated quality of the image, wherein the change of the at least one imaging parameter is determined by the Bayesian optimization system (10); and reimaging the sample (30) with the imaging device (20) with the changed imaging parameters.

Fig. 1

EP 4 521 763 A1

**Description**

Specification

The application pertains to a method for imaging a sample with an imaging device.

State of the art

Typically, an imaging device for imaging a sample has multiple parameters/settings (e.g. laser power, focus, brightness, contrast, exposure time etc.). Therefore, usually, it is not a trivial task to select a combination of imaging parameters that is optimal for imaging a particular sample so that a high quality image of the sample is acquired by the imaging device. Experienced human operators typically manage to obtain a good parameter set after a few trial-and-error rounds of imaging and evaluating the image but such a manual process is tedious. Moreover, the image quality achieved depends highly on the competence of the user.

Disclosure of the invention

The invention is based on the object to provide a method which images a sample with an imaging system with optimal or near optimal parameters.

This object is achieved with the method according to claim 1.

In particular, the object is achieved by a method for imaging a sample with an imaging device, wherein imaging parameters of the imaging device are determined by a Bayesian optimization system, wherein the method comprises the following steps: imaging the sample with the imaging device with a first set of imaging parameters; evaluating the quality of the image; changing at least one of the imaging parameters of the imaging device for imaging the sample based on the evaluated quality of the image, wherein the change of the at least one imaging parameter is determined by the Bayesian optimization system; and reimaging the sample with the imaging device with the changed imaging parameters.

One advantage hereof is that optimal imaging parameters can be achieved without human interaction, i.e., automatically. Further, the number of iterations of imaging the sample can be kept small or to a minimum. This way, the radiation emitted by the imaging device on the sample can be kept very low. Furthermore, the method produces an image of the sample with a high quality in a short amount of time. In addition, several parameters of the imaging can be optimized simultaneously, i.e., dependencies between different parameters can be taken into account. Also, the model of the Bayesian optimization system and/or the set of parameters determined by the Bayesian optimization system is interpretable easily, i.e., it is easy for a human to understand why the imaging parameters determined are good/reasonable imaging parameters.

One further object of the invention is to provide an imaging system which images a sample with an imaging system with optimal or near optimal parameters.

This object is achieved by the imaging system according to claim 15.

In particular, the object is achieved by an imaging system for imaging a sample, wherein the imaging system comprises: an imaging device for acquiring the image of the sample with imaging parameters, and a Bayesian optimization system for determining the imaging parameters of the imaging device, wherein the Bayesian optimization system is adapted for changing at least one of the imaging parameters of the imaging device for imaging the sample based on an evaluated quality of the image acquired with the imaging device.

The advantages hereof correspond to the advantages described in connection with the method above.

According to an embodiment of the method, the step of evaluating the quality of the image is carried out by a machine learning system. By this, the quality of the image can be evaluated with a high reliability.

According to an embodiment of the method, the machine learning system uses and/or implements a reference free image quality assessment for evaluating the quality of the image. Therefore, the method can also be used when there is no reference image of the sample available. This in particular applies to living samples and/or moving samples which distribution and/or image can change with every imaging/over time. Furthermore, unknown samples can be imaged accurately with this method.

According to an embodiment of the method, a reference image is provided, a degradation of the reference image is simulated to create a simulated degraded image, a reference-based image quality metric value is determined based on the similarity between the reference image and the simulated degraded image, and the simulated degraded image and the reference-based image quality metric value are used as training data for the machine learning system. By this, the image quality assessment can be trained with many data and, since simulated data is used, without the need for human annotations. Thus, the assessment of the image quality by the machine learning system is very reliable.

According to an embodiment of the method, a reference image is provided, a degradation of the reference image is simulated to create a simulated degraded image, and degradation parameters used for simulating the degradation of the reference image and the simulated degraded image are used as training data for the machine learning system. One advantage hereof is that the type of degradation used to create the simulated image is used as information. By this, the machine learning system can be trained based on which degradation parameter causes which kind of degradation of the image. Furthermore, no intermediate step after creating the degraded image, like evaluating the (simulated degraded) image, is needed for training the machine learning system. This saves resources and time.

According to an embodiment of the method, images imaged with the imaging device and corresponding image quality values are used as training data for the machine learning system, wherein the image quality value indicates the image quality assessed by a human. With this method, the image quality becomes very reliable.

According to an embodiment of the method, the machine learning system is trained for evaluating the quality of the image with the trained reference-free image quality assessment based on the whole image, an image gradient of the image, one or more histograms of the image, and/or wavelets of the image as an input. One advantage hereof is that specific information of the image is used for the quality assessment. This increases the reliability of the image quality assessment.

According to an embodiment of the method, the Bayesian optimization system uses a surrogate model for imaging of the sample with the imaging device with a set of imaging parameters and evaluating the image quality for determining the imaging parameters, wherein the surrogate model is determined by using a Gaussian process and corresponding pairs of imaging parameters and image quality values. By this, the imaging of the sample with the imaging device can be modelled with low resources and very reliably. The corresponding pairs of imaging parameters and image quality values can each comprise imaging parameters and the image quality of an image which is or would be acquired with these imaging parameters.

According to an embodiment of the method, the corresponding pairs of imaging parameters and image quality values comprises data which are based on actual imaging of samples with the imaging device, wherein in particular the respective image quality values are determined by the machine learning system. Through this, the reliability of determining the imaging with the machine learning system is very high. Furthermore, particularities of the imaging device are considered.

According to an embodiment of the method, the corresponding pairs of imaging parameters and image quality values comprises simulated data which are generated by simulating the imaging process with the imaging device, wherein in particular the image quality values are determined by the machine learning system. One advantage hereof is that simulated data can be generated in large quantity in a short amount of time. Thus, the surrogate model can be determined reliably in a short amount of time. Also, the surrogate model can be determined very accurately. In particular, the surrogate model can be determined without the imaging device being present or available.

According to an embodiment of the method, the hyperparameters and/or the kernel function of the Bayesian optimization system are optimized based on the corresponding pairs of imaging parameters and image quality values. One advantage hereof is knowledge about the sample and the behavior of the imaging device can be included. Furthermore, the Bayesian optimization system is very variable and can adapt to a multitude of combinations of samples and imaging devices.

According to an embodiment of the method, two different reward functions are modelled. This increases the reliability, in particular when one of the reward functions has one or several blind spots.

According to an embodiment of the method, the image quality and/or at least one additional image metric, e.g., a histogram of the image, is used as a reward function to optimize the hyperparameters and/or the kernel function. By this, the hyperparameters and/or the kernel function can be determined more reliably.

According to an embodiment of the method, in a first phase of the method only a subset of imaging parameters, e.g., contrast and brightness, of all imaging parameters may be changed, and, if a partial image quality value of the acquired image which value depends on the subset of imaging parameters is higher than a given threshold, in a second phase of the method all imaging parameters of the imaging process may be changed. By this, a hierarchical structure of the parameters can be used. By limiting the number and/or set of parameters which can be changed in the first phase, wholly black images or wholly white images or other images, which do not give much or any information, are avoided. Thus, the optimization of the parameters can be achieved in a shorter amount of time, since useless images are not acquired by the imaging device. Also, the radiation of the imaging device on the sample is reduced, since number of imaging the sample is reduced. The partial image quality value can comprise or depend on one or more of the following: the contrast, the sharpness, the absence of noise, the dynamic range, the tone reproduction, the color distribution and/or accuracy, the absence of distortion, the absence of vignetting, exposure, the absence of chromatic aberration, the absence of lens flare, the absence of color moiré and the absence of artifacts. E.g., the partial image quality value is the value of the contrast. The first phase ends and the second phase begins in this example when the contrast of the image exceeds a given contrast threshold.

According to an embodiment of the method, in the second phase the imaging parameters may be changed only within a multi-dimensional object, in particular a sphere, of a given size around the values of the imaging parameters which gave an image which partial image quality value was higher than a given threshold in the first phase of the method. After a preset threshold of quality of the image has been reached, all imaging parameters may be changed, but not over its full range, respectively, but over a limited range around the parameter values which resulted in a good image, i.e., an image with a partial image quality value higher than the threshold, e.g., a ball around good parameters. This way, the search for optimal parameters is constrained to sensible regions and no sudden adjustments, i.e., large changes, of the parameters are done at once which would yield imaging parameter sets in fully unknown regions.

According to an embodiment of the method, a parametrized acquisition function for determining the imaging parameters for imaging the sample with the imaging device is determined, wherein the parametrized acquisition function is trained to take the mean value, the variance of all points of the imaging parameter space, the imaging parameter space and an iteration value t as input and to output an expected value of the quality of the image for the imaging parameter space, and wherein the change of the imaging parameters is based on the parametrized acquisition function. By this, only a simplified function or problem is determined/modelled, since not the whole problem, i.e., including the imaging device, has to be modeled, but only a model for picking or setting the next suitable parameters or optimal parameters is modelled/determined.

According to an embodiment, the imaging system comprises a machine learning system for evaluating the quality of the image. By this, the evaluating of the quality of the image is very reliable.

The term "Bayesian optimization system" can mean in particular a software and/or a computer with a software and/or a CPU running a software. The Bayesian optimization carried out by the Bayesian optimization system can be an approximation or sequential design strategy to optimize a black-box function or unknown function. In this invention, the black-box function in particular can be the imaging with the imaging device which yields an image of a sample and the evaluation of the quality of the acquired image which depends on the imaging parameters used for the imaging. The Bayesian optimization system can comprise or use a machine learning system.

The term "machine learning system" can mean in particular a neural network, a neural network employing convolution neural network layers of transformers, a random forest, among others.

The imaging device can be any kind of device which outputs one image or several images or a 3D-image of a sample. In particular, the imaging device can be an optical camera, an optical microscope, a laser scanning device, or a tomography device, e.g., a X-ray tomography device.

The term "image quality" can mean in particular a value which gives a quantification how reliable or accurate features of the sample are reproduced or visible in the image. Examples of properties which can be influence the image quality are sharpness, noise, dynamic range, tone reproduction, contrast, color, distortion, vignetting, exposure, chromatic aberration, lens flare, color moiré and artifacts.

The term "imaging parameters" can in particular refer to the parameters/adjustments of the imaging device which influence the image of the sample acquired with the imaging device. The parameters of the imaging device can comprise the exposure time, the laser power, the detector gain, the focus, the zoom, the brightness, the contrast etc.

The term "imaging parameter space" can mean in particular the multi-dimensional space where each point of the space is or corresponds to an imaging parameter set, i.e., a combination of imaging parameters.

The term "reference-free image quality assessment" can in particular be a determination of a quality value of an image of a sample without having the optimal or perfect image of the sample. The determination gives a value which indicates how good/optimal an image is with respect to an (not-existing/assumed) optimal image of the sample, taken with the same or similar imaging device or taking with another imaging device or simulated. The reference-free image quality assessment or the machine learning system using the reference-free image quality assessment can be trained with reference images, but no reference image is needed for the reference-free image quality assessment itself.

Preferred embodiments are evident from the dependent claims. The invention is explained in more detail below with reference to a drawing of an exemplary embodiment. In the figure:

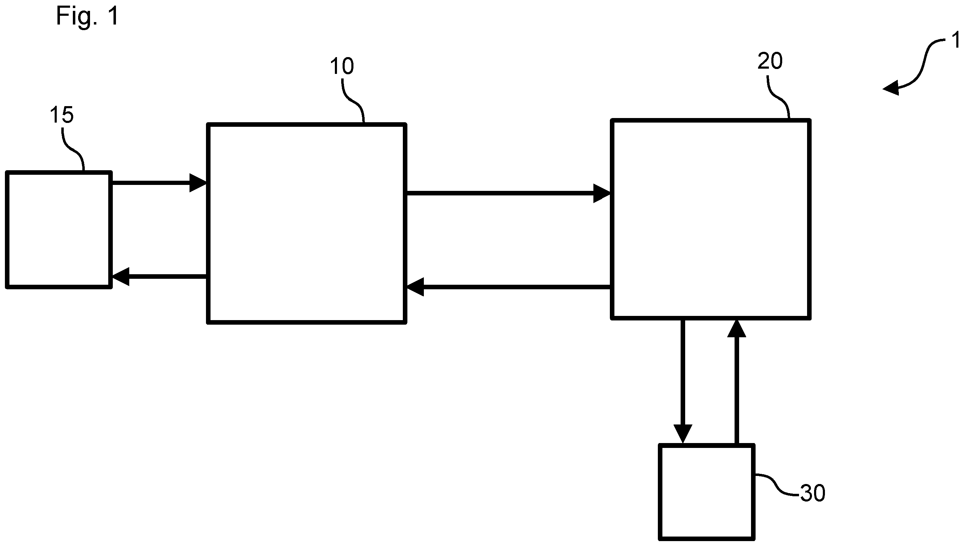

Fig. 1 shows a schematic view of an imaging system used in a method according to the invention.

The same reference numerals are used in the following description for identical parts and parts having an identical effect.

Fig. 1 shows a schematic view of the imaging system 1 comprising a Bayesian optimization system 10, a machine learning system 15 and an imaging device 20 for imaging a sample 30 used in a method according to the invention.

The imaging device 20 typically has many imaging parameters which can be changed/adjusted which influence the image or the quality of the image acquired by the imaging device 20. With an optimal or near optimal set of imaging parameters an image of sample 30 imaged with the imaging device 20 is optimal as possible, i.e., the image represents the reality as close as possible. This means that the image is sharp, has a reasonable contrast, has a reasonable brightness (not too bright, not too dark) etc.

The imaging parameters, which the imaging device 20 uses when imaging the sample 30, are determined and/or changed by a Bayesian Optimization system 10. The Bayesian Optimization system 10 uses a Bayesian Optimization (BO) or Bayesian optimization agent for finding the optimal parameters for acquiring the image with the imaging device.

The Bayesian optimization finds the global maximum of an objective function f, for which no closed-form is given or available. The objective function f can be evaluated at arbitrary points. Each point corresponds to a set of imaging parameters. However, the evaluation of the objective function f is expensive, time-wise and/or resource-wise. In the present invention, the objective function f consists of the imaging of the sample 30 and the following evaluation of the quality of the acquired image.

The parameter set x, comprising several or all imaging parameters which influence the acquisition of an image with the imaging device 20, is an element of the imaging parameter space X. z is the image imaged with the imaging parameters/parameter set x and z is an element of the imaging space Z. y is a real number representing the image quality value of the image acquired with the imaging device 20 and the imaging parameters or imaging parameter set x. Thus,

$$f: X \to \mathbb{R}$$

is a function composed of the imaging process $g: X - Z$ and the image evaluation process/assessment

$$h: Z \to \mathbb{R}$$

. I.e., $h(g(x))$, which takes high values when x is a good set of imaging parameters that maximizes the image quality value and small values when x is a not good set of imaging parameters that leads to low image quality values.

To solve the maximization $\max_{x \in X} f(\mathbf{x})$ globally, the Bayesian optimization system or Bayesian optimization uses pairs of imaging parameters and image quality values, i.e., $(\mathbf{x}_i, y_i)$, to build a surrogate model of the unknown function $f(\mathbf{x})$. Hereby, a Gaussian process (GP) is typically used.

Based on this surrogate model, sequentially the next imaging parameters/parameter set $x_i$ is determined by the Bayesian Optimization system 10. Hereby a trade-off between exploration (searching unknown regions which reveal yet unknown maxima) and exploitation (searching the currently known highest region to determine more precisely the maximum) can be made.

This trade-off can be performed by an acquisition function. There are different acquisition functions available, such as Upper Confidence Bound (UCB) or Expected Improvement (EI).

Their goal is essentially the same, but the way they use the posterior of the Gaussian process is different, resulting in a more exploratory approach or a more exploitative approach.

The Bayesian optimization or Bayesian optimization system 10 can use and/or comprise a machine learning system 15 for evaluating the quality of the image. Other forms of evaluating the quality of the image (e.g., a simple metric/value/formula) can also be used.

The present invention can comprise three components:

- an image quality assessment function h which assesses the image quality and gives an image quality value, which is used as a reward function

- a (probabilistic) surrogate model of the imaging with the imaging device 20 (wherein problem-specific prior information can be used) and evaluating the quality of the acquired image

- a trust region search is conducted with a trained acquisition function (wherein the acquisition function determines the next set of imaging parameters)

In a first step the image is imaged with the imaging device 20 with a first set of imaging parameters. The first set of imaging parameters can be arbitrary or specifically chosen as explained in the following. The first set of imaging parameters can be chosen by the Bayesian optimization system 10.

The evaluating of the image of the sample 30 can be done with a simple metric which assesses the image with respect to one property, e.g., image sharpness, contrast etc.

Alternatively, the quality of the image of the sample 30 taken by the imaging device 20 can be evaluated by a machine learning system 15. I.e., one value which indicates the quality of the image is attributed to the image. The quality can comprise elements like the contrast, the brightness. A fully white or black image has a poor quality, e.g., while an image with clearly visible structures has a good quality. A further example is that blurred image has a low/poor quality while a sharp image has a high/good quality. This evaluation is done with the image quality assessment function *h.*

After evaluating the image in respect to quality, at least one of the imaging parameters of the imaging device 20 for imaging the sample 30 is changed/amended by the Bayesian optimization system 10 based on the evaluated quality of the image. I.e., the Bayesian optimization determines a new set of imaging parameters. This means that the imaging parameters are changed in respect to the first of imaging parameters.

With this new set of imaging parameters, a new image is imaged with the imaging device 20. After this step, the method can end or the next step can be evaluating the quality of this new image with the image quality assessment function *h,* as described above for the image imaged with the first set of imaging parameters.

After evaluating the quality of the new image, the method can end (for example when a quality threshold has been reached or has been exceeded) or a further new set of imaging parameters can be determined. Then, a further new image with the further new set of imaging parameters can be acquired by the imaging device 20. Then again, the evaluation step explained above can be next or the method can end, and so on.

This means that some steps of the method can be repeated until a certain threshold has been reached or exceeded or a set number of iterative loops of the steps or part of the steps have been carried out, e.g., the method stops after a maximum of 3, 4 or 5 iterations/imaging steps.

The machine learning system 15 can be trained for evaluating the quality of the image with a reference-free image quality assessment. The quality assessment can be a reward function Bayesian optimization system 10. The function $h$ assesses the quality of the image of the sample 30. One aspect hereby is that often multiple degradations have to be considered (e.g. degradations of brightness and contrast) at the same time.

The term "reference-free" refers to the fact that no reference image of the sample 30 is usually available or needed for this assessment of the image quality. The training of the reference-free image quality assessment can be carried out by inputting images containing some level of image degradation (so-called degraded images) and labels that quantify the image quality of the degraded images.

The training data for the reference-free image quality assessment of the machine learning system 15 can be obtained in two ways. Of course, both ways can be combined.

A first way is using a simulator or a simulation for the degradation. The simulator or simulation has a high quality reference image as input and outputs a simulated degraded image. I.e., the degradation of the reference image can be the (assumed) degradation which is caused by bad, i.e., not optimal, imaging parameters of the imaging device 20. The level of degradation of the reference image/the degraded image can be tuned by changing the parameters of the simulator. The degraded output image can be compared with the reference input image and a "reference-based image quality metric value" can be determined. This value can be determined with a metric described with the name SSIM in the article "Image quality assessment: from error visibility to structural similarity" (authors: Zhou Wang, Alan C Bovik, Hamid R Sheikh, Eero P Simoncelli, et al; published in "IEEE transactions on image processing", 13(4):600-612, 2004.2), with the name LPIPS in the article "The unreasonable effectiveness of deep features as a perceptual metric" (authors: Richard Zhang, Phillip Isola, Alexei A Efros, Eli Shechtman, and Oliver Wang; published in "Proceedings of the IEEE Conference on Computer Vision and Pattern Recognition", pages 586-595, 2018. 2, 5) or with the name DISTS in the article "Image quality assessment: Unifying structure and texture similarity" (authors: Keyan Ding, Kede Ma, Shiqi Wang, and Eero P Simoncelli; published in "IEEE Transactions on Pattern Analysis and Machine Intelligence", 2020.2).

This quality value can be used as a label of the degraded image for the training data. Thus, one example datapoint that will be used to train the reference-free image quality assessment would be the following pair:
[simulated degraded image, image quality value determined with an image quality metric (simulated degraded image, high quality reference image)]

Alternatively or additionally to the quality value of the simulated degraded image, the imaging parameters of the simulator/the simulation can be used as a label and can be inputted to train the reference-free image quality assessment.

As second way for obtaining training data for the reference-free image quality assessment of the machine learning system 15 is using an assessment of the quality of an image or images by humans. By this, images from the imaging device 20 (from one sample 30 or from different samples) are obtained and human experts assess them in terms of image quality. A corresponding label representing this assessment is attached to the respective image. The assessed quality of the image together with the image imaged by the imaging device 20 can be inputted as training data to train the reference-free image quality assessment. One further possibility is that several humans assess the images, respectively, i.e., more than one human assesses the quality of the image and a mean value of the quality assessments is determined and used as a label for that image.

The training data for the reference-free image quality assessment is inputted in the machine learning system 10 for training the reference-free image quality assessment and/or to predict/estimate the image quality value based on the input image. The model of the reference-free image quality assessment of the machine learning system 10 can operate on the input image directly or on special features extracted from the input image such as the image gradient of the image, on or more histograms of the image and/or wavelets of the image. The model can be any machine learning model from random forests to neural networks employing convolutional neural network layers of transformers.

A, in particular probabilistic, surrogate model incorporating problem-specific prior information is designed. This means that the imaging process and the evaluation of the image is modeled. For this, an appropriate probabilistic surrogate model is determined by exploiting offline data, i.e. pairs of imaging parameter-sets ($\mathrm{x}_i^{sj}$) and image quality values ($y_i^{sj} = f(\mathrm{x}_i^{sj})$) corresponding to different samples ($s1 \ldots m$): $(\mathrm{x}_1^{s1}, y_1^{s1}), (\mathrm{x}_2^{s1}, y_2^{s1}), \ldots, (\mathrm{x}_N^{s1}, y_N^{s1})$,

$..., \left(x_N^{sm}, y_N^{sm}\right)$. These offline data pairs can either come from actual measurements with the imaging device 20 or from simulations of the imaging device 20.

The kernel/kernel function and/or the hyperparameters in the Bayesian optimization with Gaussian processes are determined. They are related to the knowledge about the nature and behaviour of the problem at hand. A number of different kernel functions $K_l$ can be selected for describing the Gaussian process, each of them containing a set of hyperparameters $\theta_l$. To select a proper kernel and hyperparameters for the problem, given the offline data, the marginal likelihood $\log p(f(x')|K, \theta, x)$ is maximized as in the following term:

$$Argmax_l^{x,x'\in\{x_i^{sj}\}} Argmax_{\theta_l}^{x,x'\in\{x_i^{sj}\}} -\frac{1}{2}(f(x)^T K_l(\theta_l, x, x')f(x')$$

$$+ \log\det\left(K_l(\theta_l, x, x')\right) + n\log 2\pi\,)$$

The problem can be optimized with one reward or one reward function. The Gaussian process can be a single output one which is modelling one reward.

Alternatively, the problem can be modelled as a multitask setting, where different rewards to optimize the problem are used. Then, the Gaussian process is a multioutput one which is modelling two or more rewards. These rewards can be different image quality values of the acquired image. As the input are images, the actual image acquired by the imaging device 20 holds a lot of information which can be used. After a specific image z is acquired with a set of imaging parameters $x = (x_1, \ldots, x_D)$, apart from the general reward $y = h(z)$, additional image metrics, such as its histogram, can also be extracted from the acquired image and be used as rewards. The number of pixels which are not whole black or white aids the optimization problem to avoid regions of the parameter space where almost all pixels are black or all pixels are white. The final acquisition is a weighted sum of the rewards.

By this method, it is made sure that during the optimization, the image parameter space is not over explored and the image is as optimal as possible.

With this, the surrogate model is determined by using a Gaussian process and corresponding pairs of imaging parameters and image quality values. The corresponding pairs of imaging parameters and image quality values can comprise data which are based on actual imaging of samples with the imaging device 20. One possibility is that the image quality values are determined by the reference-free image quality assessment by the machine learning system 10. The data, namely images, can be simulated data or real/actual data acquired with the imaging device 20. Based on this data, the hyperparameters and/or the kernel function of the Bayesian optimization system 10 or Bayesian optimization are optimized.

In the Bayesian optimization of the image parameters exists structure in how the search can be carried out. For example, in the beginning of the optimization to avoid whole black or white images (e.g. monochromatic black images), contrast should be low, and brightness should be adjusted until a somewhat non unicolor image of the sample 30 has been acquired. Only after this threshold has been reached or has been exceeded, focus and other parameters should be optimized.

For such a hierarchical structure, a trust region search is carried out concerning the acquisition function. In a first phase, the Bayesian optimization system 10 is only allowed to explore/change only a subset of the imaging parameters (for example: contrast and/or brightness). As soon as the reward function (here: the image quality value) reaches a predetermined threshold or exceeds it given at a point of imaging parameters $x_t$, the Bayesian optimization system 10 may change/alter all the imaging parameters but the search is allowed only within a multi-dimensional ball/sphere of pre-set radius $\varepsilon$ around the centre $x_t$ in the imaging parameter space, i.e., around a set of imaging parameters which resulted in a good image in at least one of the partial image quality values (in the first phase). This way, the search for an optimal set of imaging parameters is constrained to sensible regions. Furthermore, sudden or abrupt changes of the imaging parameters (far away from the previous imaging parameters) are prevented. The pre-set radius $\varepsilon$ can be determined depending on the sample 30 and/or the imaging device 20.

Furthermore, the simulation model of the Bayesian optimization system 10 can learn a parametrized acquisition function $\alpha_\theta$. This function is trained offline (possibly using a realtime framework). It takes as input the state of the Gaussian process, i.e., its mean value $\mu_t$ and its variance $\sigma_t$ for all the points in the imaging parameter space, the imaging parameter search space itself and the iteration $t$ and outputs an expected value of the image quality for the imaging parameter space.

This part of the method is similar to the method explained in the article "Meta-learning acquisition functions for transfer learning in bayesian optimization" (authors: Volpp, Michael, et al.; arXiv preprint arXiv:1904.02642 (2019)), but with changes on the training and architecture of $\alpha_\theta$. By the end of training, $\alpha_\theta$ has learned a suitable structured search, incorporated in its parameters, which are not reoptimized online. Training such acquisition functions is usually simpler than the usual real life or full setup (including the imaging device 20), given the simpler problem (e.g., it is not modelling the whole problem, as the Gaussian process is doing this, it is only modelling how to pick parameter sets/imaging parameters in the imaging parameter space).

List of reference numerals

1       imaging system
10     Bayesian optimization system
15     machine learning system
20     imaging device
30     sample

**Claims**

1.    Method for imaging a sample (30) with an imaging device (20), wherein imaging parameters of the imaging device (20) are determined by a Bayesian optimization system (10),
      wherein the method comprises the following steps:

          imaging the sample (30) with the imaging device (20) with a first set of imaging parameters;
          evaluating the quality of the image;
          changing at least one of the imaging parameters of the imaging device (20) for imaging the sample (30) based on the evaluated quality of the image, wherein the change of the at least one imaging parameter is determined by the Bayesian optimization system (10); and
          reimaging the sample (30) with the imaging device (20) with the changed imaging parameters.

2.    Method according to claim 1, wherein
      the step of evaluating the quality of the image is carried out by a machine learning system (15).

3.    Method according to claim 2, wherein
      the machine learning system (15) uses and/or implements a reference free image quality assessment for evaluating the quality of the image.

4.    Method according to claim 2 or 3, wherein

          a reference image is provided,
          a degradation of the reference image is simulated to create a simulated degraded image,
          a reference-based image quality metric value is determined based on the similarity between the reference image and the simulated degraded image, and
          the simulated degraded image and the reference-based image quality metric value are used as training data for the machine learning system (15).

5.    Method according to any one of claims 2 to 4, wherein

          a reference image is provided,
          a degradation of the reference image is simulated to create a simulated degraded image, and
          degradation parameters used for simulating the degradation of the reference image and the simulated degraded image are used as training data for the machine learning system (15).

6.    Method according to any one of claims 2-5, wherein

          images imaged with the imaging device (20) and corresponding image quality values are used as training data for the machine learning system,
          wherein the image quality value indicates the image quality assessed by a human.

7.    Method according to any one of claims 2-6, wherein
      the machine learning system is trained for evaluating the quality of the image based on the whole image, an image gradient of the image, one or more histograms of the image and/or wavelets of the image as an input.

8. Method according to any one of the previous claims, wherein
the Bayesian optimization system (10) uses a surrogate model of imaging of the sample (30) with the imaging device (20) with a set of imaging parameters and evaluating the quality of the image for determining the imaging parameters, wherein the surrogate model is determined by using a Gaussian process and corresponding pairs of imaging parameters and image quality values.

9. Method according to claim 8, wherein
the corresponding pairs of imaging parameters and image quality values comprise data which are based on actual imaging of samples with the imaging device (20), wherein in particular the respective image quality values are determined by the machine learning system (15).

10. Method according to claim 8 or 9, wherein

the corresponding pairs of imaging parameters and image quality values comprise simulated data which are generated by simulating the imaging process with the imaging device (20), wherein in particular the image quality values are determined by the machine learning system (15).

11. Method according to any one of the claims 8-10, wherein
the hyperparameters and/or the kernel function of the Bayesian optimization system (10) are optimized based on the corresponding pairs of imaging parameters and image quality values.

12. Method according to any one of the previous claims, wherein

in a first phase of the method only a subset of imaging parameters, e.g., contrast and brightness, of all imaging parameters may be changed, and,
if a partial image quality value of the acquired image which value depends on the subset of imaging parameters is higher than a given threshold, in a second phase of the method all imaging parameters of the imaging process may be changed.

13. Method according to claim 12, wherein
in the second phase the imaging parameters may be changed only within a multi-dimensional object, in particular a sphere, of a given size around the values of the imaging parameters which gave an image which partial image quality value was higher than the given threshold in the first phase of the method.

14. Method according to claim 12 or 13 wherein

a parametrized acquisition function for determining the imaging parameters for imaging the sample (30) with the imaging device (20) is determined,
wherein the parametrized acquisition function is trained to take the mean value, the variance of all points of the imaging parameter space, the imaging parameter space and an iteration value t as input and to output an expected value of the quality of the image for the imaging parameter space, and
wherein the change of the imaging parameters is based on the parametrized acquisition function.

15. Imaging system (1) for imaging a sample (30), wherein the imaging system (1) comprises:

an imaging device (20) for acquiring the image of the sample (30) with imaging parameters, and
a Bayesian optimization system (10) for determining the imaging parameters of the imaging device (20),
wherein the Bayesian optimization system (10) is adapted for changing at least one of the imaging parameters of the imaging device (20) for imaging the sample (30) based on an evaluated quality of the image acquired with the imaging device (20).

Fig. 1

Europäisches
Patentamt

European
Patent Office

Office européen
des brevets

## EUROPEAN SEARCH REPORT

**Application Number**

EP 23 20 1321

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 239 999 A1 (MITSUBISHI ELECTRIC CORP [JP]) 6 September 2023 (2023-09-06) * paragraphs [0011] - [0074]; figures 1-5 * | 1,2,7,15 | INV. H04N23/60 H04N23/617 |
| X | CN 116 347 247 A (CHANGCHUN INST OPTICS FINE MECH & PHYSICS CAS) 27 June 2023 (2023-06-27) * the whole document * | 1-3,15 | |
| A | US 2020/026954 A1 (RHODES ANTHONY [US] ET AL) 23 January 2020 (2020-01-23) * abstract * | 8-11 | |

TECHNICAL FIELDS
SEARCHED (IPC)

H04N

The present search report has been drawn up for all claims

| Place of search | Date of completion of the search | Examiner |
|---|---|---|
| The Hague | 24 May 2024 | Mao, Pauline |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

...................................................................................

& : member of the same patent family, corresponding
  document

EPO FORM 1503 03.82 (P04C01)

Europäisches
Patentamt

European
Patent Office

Office européen
des brevets

**Application Number**

EP 23 20 1321

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-3, 8-11, 15(completely); 7(partially)

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-3, 15(completely); 7(partially)

     Imaging method with reference free image quality assessment.

        - - -

2. claims: 4, 5

     Imaging method with image quality evaluation involving the simulation of a degradation of a reference image.

        - - -

3. claim: 6

     Imaging method with image quality assessment by a human.

        - - -

4. claim: 7(partially)

     Imaging method with image quality evaluation involving an image gradient of an image.

        - - -

5. claim: 7(partially)

     Imaging method with image quality evaluation involving the wavelets of an image.

        - - -

6. claims: 8-11

     Imaging method involving a Bayesian optimization using a surrogate model determined by using a Gaussian process.

        - - -

7. claims: 12-14

     Imaging method with a first phase involving a subset of imaging parameters and a second phase all imaging parameters.

        - - -

**ANNEX TO THE EUROPEAN SEARCH REPORT
ON EUROPEAN PATENT APPLICATION NO.**

EP 23 20 1321

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | | Publication date | Patent family member(s) | | Publication date |
|---|---|---|---|---|---|
| EP 4239999 | A1 | 06-09-2023 | EP | 4239999 A1 | 06-09-2023 |
| | | | JP | 7471444 B2 | 19-04-2024 |
| | | | JP | WO2022091404 A1 | 05-05-2022 |
| | | | WO | 2022091404 A1 | 05-05-2022 |
| CN 116347247 | A | 27-06-2023 | NONE | | |
| US 2020026954 | A1 | 23-01-2020 | CN | 112580416 A | 30-03-2021 |
| | | | EP | 3798904 A1 | 31-03-2021 |
| | | | US | 2020026954 A1 | 23-01-2020 |
| | | | US | 2022130130 A1 | 28-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHOU WANG** ; **ALAN C BOVIK** ; **HAMID R SHEIKH** ; **EERO P SIMONCELLI et al.** Image quality assessment: from error visibility to structural similarity. *IEEE transactions on image processing*, February 2004, vol. 13 (4), 600-612
- **RICHARD ZHANG** ; **PHILLIP ISOLA** ; **ALEXEI A EFROS** ; **ELI SHECHTMAN** ; **OLIVER WANG**. The unreasonable effectiveness of deep features as a perceptual metric. *Proceedings of the IEEE Conference on Computer Vision and Pattern Recognition*, February 2018, vol. 5, 586-595
- **KEYAN DING** ; **KEDE MA** ; **SHIQI WANG** ; **EERO P SIMONCELLI**. Image quality assessment: Unifying structure and texture similarity. *IEEE Transactions on Pattern Analysis and Machine Intelligence*, February 2020
- **VOLPP** ; **MICHAEL et al.** Meta-learning acquisition functions for transfer learning in bayesian optimization. *arXiv preprint arXiv:1904.02642*, 2019